## Europäisches Patentamt
## European Patent Office
## Office européen des brevets

(19)

(11) Publication number: **0 010 457**
**B1**

(12)

# EUROPEAN PATENT SPECIFICATION

(45) Date of publication of patent specification: 24.11.82

(51) Int. Cl.³: **G 01 N 27/28,**
**G 01 N 33/48**

(21) Application number: 79302340.9

(22) Date of filing: 25.10.79

(54) Device for determining the activity of an ionic analyte of a liquid.

(30) Priority: 23.07.79 US 59816
25.10.78 US 954689

(43) Date of publication of application:
30.04.80 Bulletin 80/9

(45) Publication of the grant of the patent:
24.11.82 Bulletin 82/47

(84) Designated Contracting States:
BE CH DE FR GB IT

(56) References cited:
EP - A - 0 010 456
EP - A - 0 014 797
CH - A - 564 770
FR - A - 1 444 146
US - A - 3 497 442
US - A - 4 053 381

(73) Proprietor: EASTMAN KODAK COMPANY
343 State Street
Rochester, New York 14650 (US)

(72) Inventor: Columbus, Richard Lewis
Kodak Park
Rochester, New York (US)

(74) Representative: Pepper, John Herbert et al,
KODAK LIMITED Patent Department P.O. Box 114
190 High Holborn
London WC1V 7EA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Device for determining the activity of an ionic analyte of a liquid

This invention relates to a device for determining the activity of an ionic analyte in a liquid. Such devices are, for example, valuable quantitative tools in the field of clinical chemistry to determine the existence and cause of certain body illnesses and abnormalities.

A disposable test device has been developed for the potentiometric analysis of blood serum using two identical ion-selective electrodes (hereinafter, "ISE's"). Examples of such devices are disclosed in U.S.—A— 4,053,381. The ISE's of such a device are overlaid, or otherwise contacted, with an ion bridge that provides for ionic flow between a drop of a test liquid and a drop of a reference liquid, the bridge also having apertures allowing the drops to contact their respective electrodes. When an electrometer or potentiometer makes contact with both electrodes, a differential potential is detected that is proportional to the difference in activity, and therefore concentration, of the ion under analysis. An embodiment useful for absolute measurements is also disclosed.

Such a device has permitted rapid, automatic measurements of electrolytes using very small samples of serum. Although such advantages have constituted marked improvements, there have remained certain aspects that are subject to further improvement. In one form of the device, the bridge between the electrodes has comprised an absorbent matrix open to the atmosphere, causing evaporation and loss of, or contamination by, analytes such as $CO_2$. In another form, the ion bridge has comprised a fibrous matrix the fibres of which are not always restricted to desired orientations. Occasionally such fibres can extend out from the bridge and contact one or more underlayers of the electrode. When a portion of the liquid to be tested wets such fibres, the ISE can become shorted.

Yet another drawback with certain materials used as an ion bridge has been their inability to transport whole blood. For example, a fibrous matrix such as paper has capillary passageways which are too tortuous for the transport of whole blood. The alternative of course is to phase-separate the serum, a time-consuming additional step.

Finally, US—A— 3497442 relates to a fluid testing device in which fluid is introduced into a chamber containing electrodes for performing certain tests on the fluid, the chamber being formed by two members between which the fluid is spread.

In accordance with the present invention there is provided a device for determining the activity of an ionic analyte of a liquid, said device including a pair of solid electrodes each capable of generating an electrical potential proportional to the activity of an analyte of the liquid in contact with the electrode, and flow control means for ensuring contact of liquid with the electrodes, the flow control means extending from a first location adjacent one of said electrodes to a second location adjacent the other of said electrodes, characterized in that said flow control means includes two opposed surfaces extending from said first location to said second location, said surfaces being spaced apart a distance effective to induce capillary flow of the liquid between said surfaces and to provide a transport zone, the transport zone being in communication with the exterior of the device and with the electrodes and at least 50% of the volume of the zone being void, whereby liquid in a drop applied to the exterior of the device can flow into the zone, under capillary action within the zone, and into contact with the electrodes.

European Patent Application No. 79302338.3 (publication number 0 014 797) describes generically the use of opposed transport surfaces to distribute a liquid drop by capillary action.

European Patent Application No. 79302339.1 (publication number 0 010 456) is an improvement on European Patent Application No. 79302338.3 and discloses a means for uring a drop deposited on the device into contact with a means for transporting liquid through the device.

Embodiments of the invention will now be described, by way of example, with reference to the accompanying drawings, in which:

Figure 1 is an isometric view of an ISE test device constructed in accordance with the invention;

Figure 2 is a sectional view taken generally along the vertical plane through line II—II of Figure 1;

Figure 3 is a plan view of the ion bridge of the device of Figures 1 and 2, illustrating the spreading pattern of liquid within the bridge;

Figures 4 and 5a are fragmentary sectional views similar to that of Figure 2 but illustrating other embodiments;

Figure 5b is a plan view similar to Figure 3 but illustrating the results of liquid transported by the device of Figure 4;

Figure 6 is a fragmentary plan view similar to that of Figure 3 but illustrating another embodiment;

Figure 7 is an elevational view in section of still another embodiment of the invention;

Figure 8 is a sectional view similar to that of Figure 4, but illustrating yet another embodiment;

Figure 9 is a fragmentary sectional view taken generally along the plane of the line IX—IX in Figure 8. Some of the fibres have been omitted for clarity;

Figure 10 is a fragmentary plan view similar to that of Figure 3, but illustrating yet another embodiment;

Figure 11 is a sectional view taken generally along the plane of the line XI—XI in Figure 10;

Figure 12 is a plan view of still another embodiment of the invention;

Figure 13 is a sectional view taken generally along the plane of line XIII—XIII in Figure 12;

Figure 14 is a sectional view similar to that of Figure 13, but illustrating still another embodiment; and

Figure 15 is a fragmentary sectional view taken generally along the line XV—XV in Figure 14.

Devices in accordance with this invention are capable of measuring the activity of various ionic analytes, commonly called electrolytes, found in aqueous solutions. From this measurement the corresponding concentration of the analyte is calculated by known methods using calibrated relationships.

The embodiments hereinafter described refer to whole blood or blood serum as the preferred test solution. However, any electrolyte of an aqueous solution can be so measured, including industrial analytes. Examples of biological liquids include blood plasma, urine and spinal fluid.

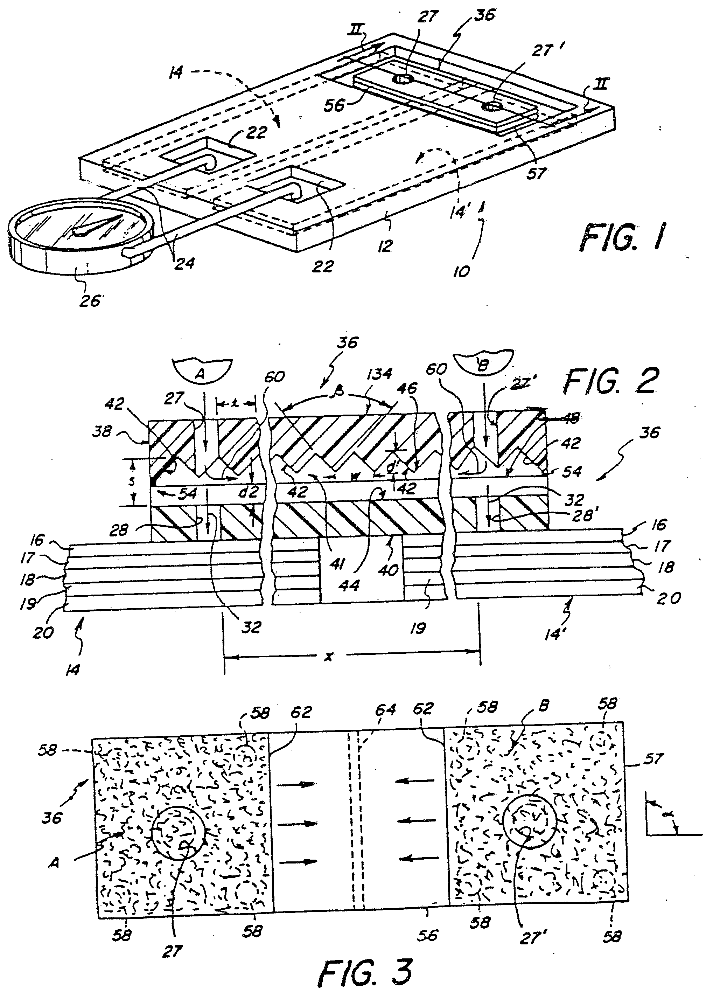

It has been discovered that an improved liquid transport device can be provided to direct the flow of liquid in a test drop to an electrode for potentiometric measurement. Such measurement can be done either differentially or "absolutely", the differential mode being the preferred mode. As is explained in U.S.—A—4,053,381, these two modes differ primarily depending on whether a drop of a known reference liquid is deposited along with the test sample drop, or not, respectively. In accordance with the present invention, a device 10 for differentially measuring electrolytes comprises (see Figures 1—3) an electrically insulative frame 12 which mounts a spaced-apart pair of preferably solid ion-selective electrodes 14, 14' (hereinafter, "ISE's") spanned by a flow control bridge 36. As described in detail in U.S.—A—4,053,381, each ISE is a generally flat multilayered element comprising adjacent layers 16—20, (Figure 2). When a drop of blood serum A or B (see Figure 2) makes contact with layer 16, an ion-selective membrane which contains an ionophore and a solvent, the ion $Z \oplus$ of choice is carried, or otherwise effectively penetrates, to the underlying layers 17—18 where an electrical potential is generated proportional to the activity of that particular ion. Layer 17, for example, can be a dried hydrophilic binder containing the salt $Z^{\oplus}X^{\ominus}$. Layer 18 in such instances is the $X^{\oplus}$ salt of an electrically conductive metal $M^{\oplus}$, and metal $M^{\circ}$ forms layer 19. Because layer 19 is an electrically conductive layer, a potential can be detected by electrometer 26 (see Figure 1) via probes 24 which penetrate into contact with layer 19 at windows 22. Any difference in these potentials due to the two different ion activities of two liquids A and B, one an unknown and one a reference having a known concentration of $Z \oplus$, is registered as a different potential on the electrometer 26. This reading then is converted into a measure of concentration of the ionic analyte $Z \oplus$.

In this embodiment of the invention the flow control means comprises bridge 36 that provides means for directing the flow of liquids from drops A and B to ISE's 14 and 14' and to each other (Figure 2). By such means, an electrical circuit is completed and the difference in the potentials generated in the ISE's will register on electrometer 26. The bridge 36 comprises two members 38 and 40 spaced apart, in the manner described below, to form a transport zone 41. To introduce liquid in drops A and B into zone 41, passageways formed as apertures 27 and 27' are located in member 38. To provide liquid communication between zone 41 and ISE's 14 and 14', apertures 28 and 28' are positioned above, and adjacent to, the respective ISE 14, 14' to be contacted by the respective liquid.

Any convenient drop dispenser can supply the drops A and B, either in free-falling form or as drops touched-off from a platform. Preferably, the drops are dispensed approximately at the same time to ensure proper junction formation, as described below.

Members 38 and 40 have opposing internal surfaces spaced apart a distance "s" effective to induce capillary flow of liquid between the surfaces and to bound, in part, the transport zone 41. In one embodiment of the invention, each surface bears a pattern of exposed grooves 42 and 44, which can be, for example, sawtooth in shape. Grooves 44 extend from at least the vicinity of aperture 28 to at least the vicinity of aperture 28', and are preferably substantially parallel and straight. Grooves 42 are superimposed over grooves 44 preferably at a positive, that is, non-zero, angle $\alpha$ (see Figure 3). Most preferably alpha is about 90°, and the grooves 42 are also substantially parallel and straight along their lengths. Grooves 42 and the ridges 46 which bound them, have a width "w" and thickness "t", which may respectively be about 13 microns. The same or different dimensions can be used for grooves 44 and their ridges. Grooves 42, as illustrated in Figure 2, represent a groove pattern as it would appear magnified approximately 700 times.

Member 38 is spaced from member 40 by any suitable means, such as edge walls 54, so that there is capillarity. Walls 54 can be affixed to member 40 by means such as adhesive. Preferably, at least a portion of the space between grooves 42 and 44 is left exposed at one or both of zone edges 56 and 57 of bridge 36 (Figure 1) whereby air can be vented as liquid menisci advance.

Where exposed, the edges 56 and 57 (Figure 1) represent an energy barrier to further flow of the liquid. That is, the line of intersection between the edges 56 and 57 and the opposed surfaces represents a discontinuity beyond which capillary flow of the liquid can not proceed. Thus, leakage of liquid from the bridge is avoided.

Alternatively, the two members can be welded together at appropriate positions, such as by ultrasonic welding to form bridging studs that space the members apart. For example, such welding of the two members at relatively small spots 58, shown in broken lines in Figure 3, provides the desired spacing.

Thus, liquids in the applied drops A and B not only penetrate apertures 28 and 28' (Figure 2) as shown by arrows 32, to contact ISE's 14 and 14', they also follow arrows 60 to form two advancing wave fronts 62 (Figure 3) that flow in a predictable manner. Because grooves 42 and ridges 46 are linear, so are wave fronts 62. Because ridges 46 (Figure 2) are parallel throughout bridge 36, the wave fronts when they meet form a junction 64 (Figure 3) as shown in broken lines.

Grooves 42 and 44 and their ridges 46 and 48 have a number of dimensions which can be varied depending on the desired rate of flow of a particular liquid. These dimensions are the grooves' width w; the ridges' thickness t; distance s, already mentioned; the depths $d_1$ and $d_2$ of grooves 42 and 44, respectively; the included angle $\beta$ of ridges 46; and the angle of intersection $\alpha$ between the two sets of grooves (Figure 3). In all cases, capillary flow should be maintained across the opposing surfaces of members 38 and 40 within transport zone 41 at a rate that is consistent with the intended end use. For uses that contemplate certain lesser flow rates, distance s can be no greater than $d_1$ plus $d_2$, that is, the top portions of ridges 46 can contact the top portions of ridges 48 (this is not shown). However, in such instances w should be selected so that multidirectional flow will be achieved notwithstanding a value for s equal to only $d_1$ plus $d_2$. If w is reduced below such larger values, when s=$d_1$ plus $d_2$, the transport time or time of spreading can become prolonged beyond useful values.

The width w of grooves 42, for example, does partially control, along with depth $d_1$ or $d_2$, the rate of advance of the liquid within those grooves. The rate has been found to vary roughly as an inverse function of the cross-sectional area of the groove. (The cross-sectional area of the groove is transverse to the flow along the length of that groove). That is, the smaller the transverse cross-sectional area of a groove, the faster is the rate of advance of the liquid along that groove, because of capillary action. Furthermore, where the grooves 42 and 44 have uniform cross-sectional areas different one from the other, the direction of the grooves (measured lengthwise) having the smaller value of that areas will be the dominant flow direction.

Preferably, to ensure a minimum of mixing of the two liquids at the junction 64 (Figure 3) the grooves 42 and 44 are respectively sized so that grooves 42 fill to their zonal edges 56 first, before junction 64 forms.

Included angle $\beta$ of ridges 46 or 48 is preferably between about 10° and about 100°, most preferably about 90°.

Angle $\alpha$ can be varied even to the point of equalling zero. In the latter case, however, apertures 27 and 28 should have a spacing from apertures 27' and 28', such as distance "x" (Figure 2) sufficient to ensure that the liquid in each drop starts to spread from its aperture towards the liquid from the other drop within the transport zone before the liquid from the other drop reaches that aperture. Otherwise, for example, liquid from drop A from aperture 27 will flow into contact with ISE 14' causing contamination, and junction 64 will not form. It is to avoid this problem that the preferred value of angle $\alpha$ is selected to be about 90°. The exact value for the spacing of the apertures depends on the value of the angle $\alpha$ (i.e., how close it is to zero), the size of the grooves, and the surface tension of the liquid under analysis.

Furthermore, the cross-sectional shape of grooves 42 and 44 need not be saw-toothed as shown, but can be varied. For example, they can be rounded and ridges 46 can be truncated.

In the transport of blood serum, such as in the above-described use, it is preferred that the groove pattern variables of bridge 36 can chosen as follows. For grooves having a depth $d_1$ of between about 3 and about 15 microns, w=t, and a w/$d_1$ ratio between about 0.35 and about 7.5, the dimension s can be varied between about 0.06 mm and about 0.6 mm for best results. Lesser values of s can be used, except that when the dimension s approaches $d_1$ plus $d_2$, spreading through the zone becomes extremely slow. Values of s greater than about 0.6 mm can in some cases destroy the capillary effect and thus destroy the control over the wave front shape and rate of movement.

A preferred range for the width w of the grooves is between about 5 microns and about 5 mm, it being noted that beyond about 5 mm, the rate and direction of spreading becomes so ill-defined as to be insignificantly different from the results achieved by two smooth surfaces.

A representative example of the above-described potentiometric analysis of blood serum is as follows:

Example
    w (for member 38)=13.3 microns
    w (for member 40)=13.3 microns
    t (for member 38)=13.3 microns
    t (for member 40)=13.3 microns
    s=63.6 microns
    beta=90°
    $d_1$=6.8 microns
    $d_2$=6.8 microns

Distance×between apertures=7 mm (see Figure 2).

Preferred materials for at least the opposing surfaces of members 38 and 40, that is, for the surfaces of grooves 42 and 44, are non-fibrous materials that are substantially impervious to blood serum. Examples of such materials include acetates such as cellulose triacetate, cellulose acetate propionate, and cellulose acetate butyrate; polystyrene; polyethylene; polypropylene; ABS plastic; and polycarbonate.

It will be appreciated that a primary advantage of the construction of zone 41 as described above, is its generally open configuration that nevertheless provides a controlled flow. Such a configuration leaves ample room for the flow of whole blood, unlike devices which utilize porous absorbent bridge means with void volumes of less than about 50%. Furthermore, the materials described in the preceding paragraph, by being free of fibres, avoid the possibility of shorting out the ISE's.

It has been found that evaporation from, and contamination of, zone 41 are minimized.

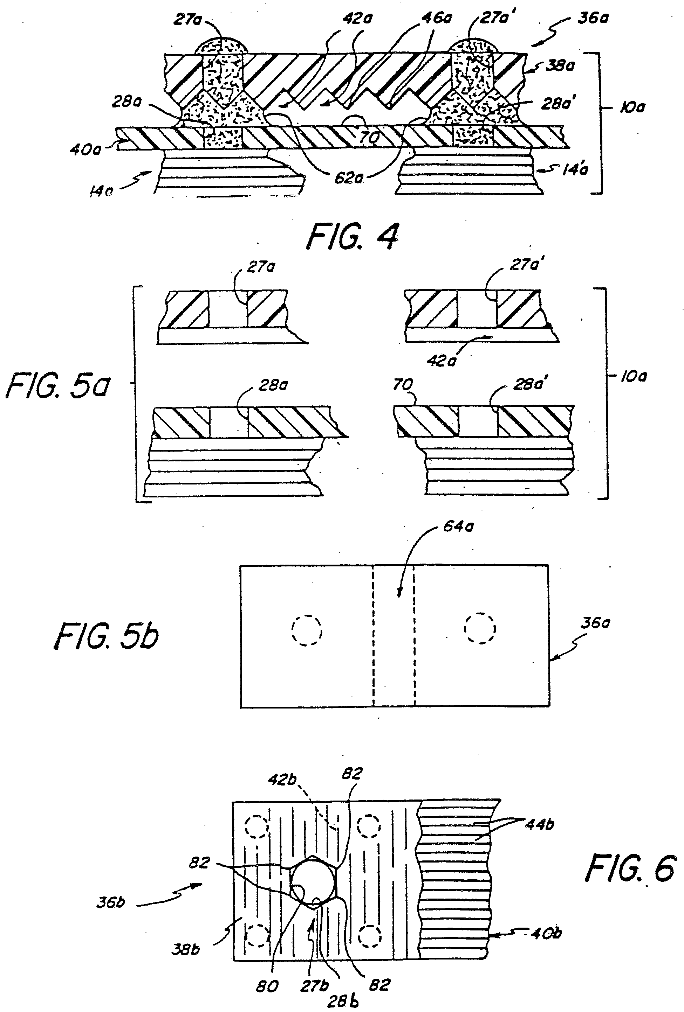

Alternatively, as in the embodiments shown in Figures 4 and 5a, at least one of the opposing surfaces forming the transport zone can be completely smooth. Parts similar to those previously described bear the same reference numeral, but with the distinguishing suffix "a" appended. Thus, device 10a and bridge 36a (Figure 4) are generally identical to the device and bridge of the previous embodiment; for example, apertures 27a, 27a', 28a and 28a' provide flow of the two drops to ISE's 14a, 14a' respectively, as described above. However, only member 38a is provided with grooves 42a and ridges 46a as before, the opposing member 40a having a substantially smooth surface 70. As further alternatives, the length of grooves 42a can extend from aperture 27a to aperture 27a' (see Figure 5a) provided that the spacing between these two apertures is increased to prevent one drop from filling both apertures 28a and 28a' before the other is deposited. Also, grooves 42a can be eliminated (not shown) to form a smooth surface, and surface 70 can be retained as a smooth surface or can be grooved as in the embodiment of Figure 2.

It will be appreciated that, in the embodiments of Figures 4, 5a and 5b, the general smoothness of the surfaces of either or both members 38a and 40a leads to a generally unpredictable, undirected configuration for the advancing wave fronts 62a. The result is that the junction 64a which forms (Figure 5b) is characterized by a relatively large width creating a wide diffusion zone that is relatively slow to reach equilibrium. It was thought that such a wide junction 64a would be likely to produce a significant bias in the form of a large and/or varying junction potential. In actuality, however, the electrical properties of ISE's 14a and 14a' are such that such a detrimental junction potential is not readily detectable.

However, it is contemplated that certain refinements may occur in the construction of the ISE's such that the shape and potential of junction 64a might become significant. In such a case, the embodiment of Figures 1—3 would be preferred as providing controlled predictable wave front peripheries that join to produce a minimum width junction 64.

Figure 6 illustrates a currently preferred form of the liquid ingress apertures in exterior member 38b. Parts similar to those previously described bear the same reference numeral but with the distinguishing suffix "b" appended. Thus, bridge 36b comprises upper, exterior member 38b and lower, interior member 40b. Each member 38b, 40b has grooves 42b and 44b in its opposing surface, as previously described. However, the apertures through member 38b, of which only 27b is shown, are preferably formed by a cornered sidewall 80. A drop of liquid may not have been centred on the aperture and may largely lie on the surface of member 38b. To drive a drop of liquid into the aperture, sidewall 80 is provided with a plurality of corners 82. Because of the surface tension of a deposited drop, such corners act as sites for increasing the centring vectors, thus driving the drops from the edge of the aperture into the aperture centre. The fewer the number of corners, the less likely it is a drop will contact a corner and be affected. However, if too many corners are included, the aperture sidewall approaches a cylinder in shape, thus losing the benefit of the corner. Preferably, six corners 82 are utilized such that the aperture has the shape of a hexagon when viewed in plan.

The aperture 27b can have a variety of dimensions, but preferably for a drop volume of about 10 $\mu l$, it is about 0.25 cm between opposed flats of the hexagon.

Aperture 28b of member 40b conveniently is cylindrical as in the previous embodiment, being aligned with aperture 27b, as shown in Figure 6.

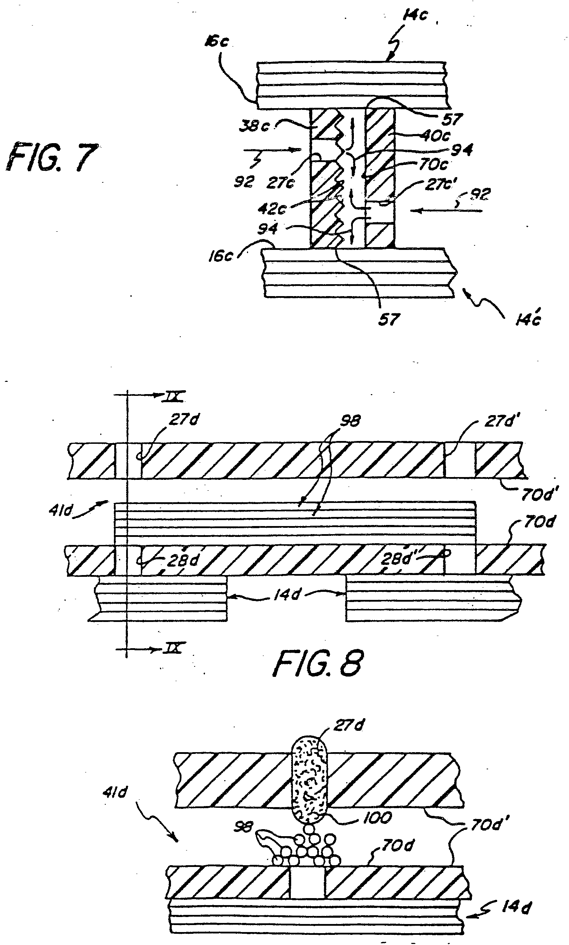

Devices in accordance with the invention need not have the ion-flow bridge disposed in a plane parallel to that of the planes of the ISE's nor need there be a total of four apertures through the bridge members. An alternative embodiment is illustrated in Figure 7, wherein parts similar to those previously described bear the same reference numeral but with the distinguishing suffix "c" appended. In this embodiment, the liquid communication between the transport zone and the ISE's is not by way of internal apertures through one of the members 38c or 40c. Instead, the transport zone itself provides the communication in that edges 57 of the zone terminate at ion-selective layer 16c of each ISE 14c and 14'c. Thus, flow of each drop proceeds as shown by arrows 92 and 94, through apertures 27c and 27c', into the transport zone where capillary flow is controlled by the opposing surfaces of the members 38c and 40c, and eventually to layers 16c of the ISE's. The opposing surfaces of members 38c and 40c can be smooth, as at 70c, or can have grooves such as grooves 42c.

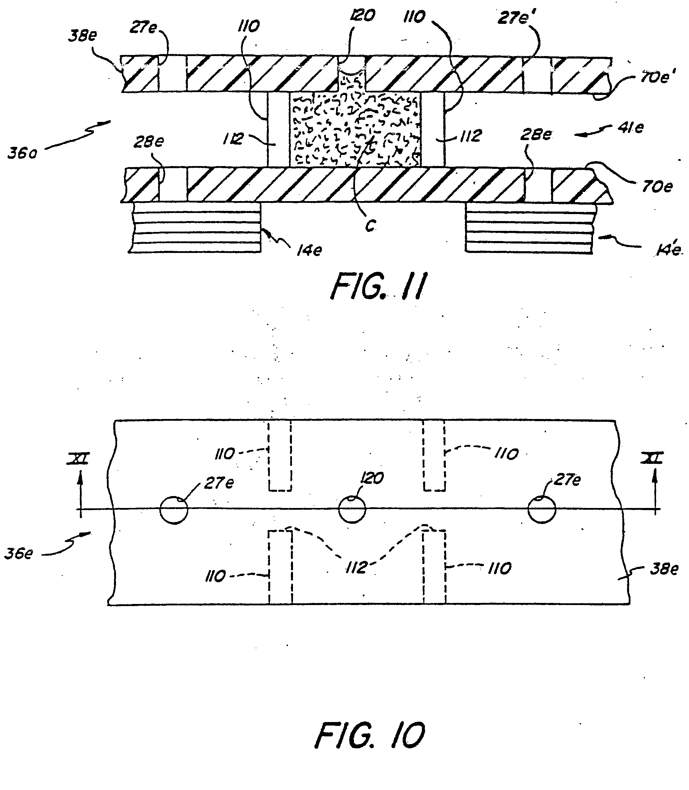

The embodiment of Figures 8 and 9 illustrates that fibres can be used in the transport zone. Parts similar to those previously described bear the same reference numerals but with the distinguishing suffix "d" attached. Thus, device 10d is generally the same as device 10a (Figure 4) and can have any one of the aforedescribed grooved or smooth configurations for the two opposing surfaces. In addition, a fibrous material 98 is loosely disposed in zone 41d, the fibres being generally parallel and approximately straight, extending from at least aperture 27d to aperture 27d' (Figure 8). Preferably the fibres are coaxial and non-woven, and occupy no more than about 50% of the volume of zone 41d to permit transport of whole blood. The most preferred embodiment is one in which the fibres comprise only 5% of the volume of the zone. The alignment of the fibres from aperture 27d to aperture 27d' ensures that the pressure loss due to interference to flow between the apertures is minimized. In this fashion, the fibres provide additional capillary transport surfaces to move the liquid from aperture 27d to aperture 27d', without being so closely packed the whole blood cannot be transported. Such fibres are particularly useful when surfaces 70d and 70d' are low surface energy materials such as polystyrene. Filter tow fibres fabricated from cellulose acetate, for example, can be used.

Most preferably, the fibres extend out into the space under aperture 27d, so that they are in the flow path from the aperture 27d. As a result, the fibres are contacted by the meniscus 100 (Figure 9) as it comes out of the aperture. In this fashion the fibres help ensure that the drop wets both surfaces 70d and 70d' and that flow through zone 41d is initiated.

The confinement of the fibres to an orientation that is generally perpendicular to the axis of apertures 27d and 27d' is sufficient to ensure that no portions of the fibres extend through the lower apertures 28d and 28d' in a manner such as might permit liquid contact with the other ISE and cause a short.

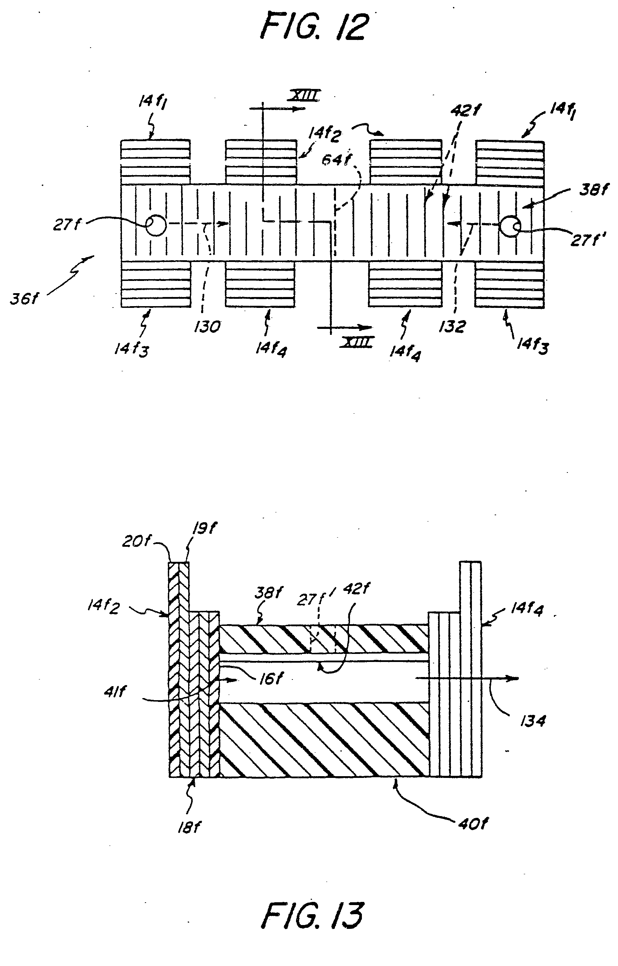

In the embodiment illustrated in Figures 10 and 11, a third passageway is provided intermediate the first two as a means for introducing a third liquid. Parts similar to those previously described bear the same reference numeral but with the distinguishing suffix "e" applied. Thus, the device is provided as before with electrodes 14e and 14'e and bridge 36e. Apertures 27e, 27e' and 28e, 28e' act as passageways into zone 41e and to the electrodes for the liquid from two drops. To restrict flow within the zone 41e, gating walls 110 extend from surface 70e to surface 70e'. Apertures 112 in the walls allow restricted flow between apertures 27e and 27e'.

An aperture 120 is included in member 38e of the bridge, approximately centred between apertures 27e and 27e'. This aperture allows the introduction of a third liquid C (Figure 11) either before, during or after the deposit of the two drops at apertures 27e and 27e'. Preferably a drop of the third liquid is applied prior to the deposition of the other two drops, and the volume of the third drop together with the restriction created by gating walls 110 act to confine the third liquid to the space between walls 110. Subsequently, the other two drops are applied and the entire zone 41e becomes filled.

Such an embodiment is particularly useful in applying a salt solution having ions of equal transference, of the type described in U.S.—A— 4,053,381. The salt solution acts to suppress junction potentials when the two ionic solutions meet within the zone 41e.

As an alternative to applying the third drop to aperture 120 immediately prior to the application of the other two drops, the third solution can be added and allowed to dry, coating surfaces 70e and 70e' between the gating walls 110. The salts of the coating then re-dissolve as the two test drops spread through the zone. Or as a further alternative, a gelatinous solution containing the salts can be introduced through apertures 120 and allowed to "set".

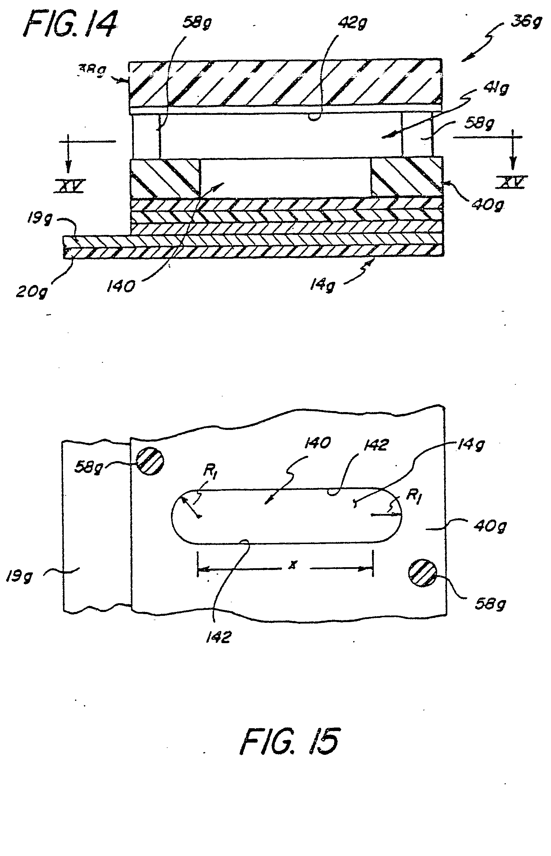

In the embodiment of Figures 12 and 13, more than one ionic analyte is tested from a single drop by incorporating at least one other pair of electrodes into the device adjacent to the first pair. Parts similar to those previously described bear the same reference numeral but with the distinguishing suffix "f" applied. Thus, the flow control means is bridge 36f comprising upper or exterior member 38f and lower, interior member 40f (see Figure 13) which may or may not be mounted on a larger support (not shown). In the absence of such a support, member 40f has a thickness which renders it self-supporting. Each such member 38f and 40f may or may not have exposed grooves in the opposing surfaces; e.g., grooves 42f (Figure 13) as described previously, and apertures 27f and 27f' are located in member 38f as liquid drop inlet apertures, as described for previous embodiments. However, no corresponding pair of apertures exists in member 40f. Instead, the pairs of ISE's $14f_1$, $14f_2$, $14f_3$ and $14f_4$ are disposed along the exposed sides of a capillary transport zone 41f that is formed in the following manner, similar to the embodiment shown in Figure 7.

Zone 41f is confined in the vertical direction between members 38f and 40f, and horizontally between ISE pairs $14f_1$, etc. To space apart members 38f and 40f, the pairs of ISE's are adhered to the side edges of members 38f and 40f by a suitable adhesive, and are disposed so that they also are spaced apart and electrically isolated. The ion-selective membrane (or substitute) layer 16f of the ISE's (Figure 13) are all directed inwardly towards the zone to permit contact of the liquid as the liquids from the two drops move through zone 41f from the inlet apertures along paths 130 and 132 (Figure 12). Air can vent from the zone at the edges of the bridge between adjacent ISE's as indicated by arrow 134 (Figure 13) as the two drops fill the zone.

To facilitate contact between the electrodes and a potentiometer, conductive layer 19f and support layer 20f can be formed to extend upwards beyond adjacent layer 18f, (see Figure 13).

Because one of each pair of electrodes must contact the drop deposited at aperture 27f, and the other of each pair must contact the drop deposited at aperture 27f′, the pairs are split so that one of electrode pairs 14f₁, 14f₂, 14f₃ and 14f₄ is adjacent to aperture 27f and path 130 and the other of each pair is adjacent to aperture 27f′ and path 132. The sequence of electrodes around each aperture is not critical. Of course, it is preferred that the junction between the two drops form generally in the middle of bridge 36f, between the members of the paired electrodes, as at 64f (Figure 12). For this reason the grooves, if any, of members 38f and 40f should be designed to ensure flow rates that will locate junction 64f as described. Alternatively, a plurality of gating walls (not shown) such as are described in the embodiment of Figure 10, can be used.

Each of the electrode pairs is specific to the analysis of a different one of the analytes. For the differential mode of measurement, each electrode of any pair is identical to the other of the pair. Thus, the two electrodes for electrode pair 14f₁ can be constructed and adapted to detect $K^\oplus$, the two electrodes for pair 14f₂ to detect $Na^\oplus$, the two electrodes for pair 14f₃ to detect $Cl^\ominus$, and the two electrodes for pair 14f₄ to detect $HCO_3^\ominus$. The chemistries of the layers of the electrodes are not part of this invention, and comprise generally that described above for ion Z $\oplus$ with the appropriate selection of an ionophore for layer 16f. For example, in the case of the $K^\oplus$ electrodes, layer 16f contains an ionophore such as valinomycin or one of the others listed in *Research Disclosure*, Vol. 161, Publication No. 16113, Sept. 1977, 2nd col. of p. 32, published by Industrial Opportunities Limited, Homewell, Havant Hampshire PO91EF, United Kingdom. For the $Na^\oplus$ electrodes, the ionophore is preferably methyl monoensin, and for $HCO_3^\ominus$ the ionophore is preferably 4-octyl trifluoroacetophenone and the solvent is trioctyl propylammonium chloride. For the $Cl^\ominus$ electrodes, layers 16 and 17 are replaced by an interferant-barrier overcoat layer. Such overcoat layer can be, e.g., cellulose acetate containing a polyol.

In use, the drop of sample to be tested is deposited in one of apertures 27f and 27f′ and the reference drop in the other. The drops spread by capillary action along the paths of arrows 130 and 132, contacting the electrodes and eventually each other at junction 64f.

Readings can be made by contacting layer 19f of each electrode in a given pair with the probes of an electrometer.

The spacing between members 38f and 40f should be as described previously. The width of zone 41f, e.g., the distance between ISE's 14f₁ and 14f₃, can be widely varied, preferably between about 5 and 15 mm. The total length of zone 41f is a matter of choice.

Yet another embodiment of the invention permits the so-called "absolute" measurement of the analyte activity. The embodiment is that of Figures 12 and 13, except that one of the eight electrodes 14f₁ through 14f₄ is a common, general reference electrode for all the other electrodes, and each of the other electrodes is an ISE of the type described in previous embodiments, designed to measure with that general reference electrode a particular analyte different from the analytes tested by the others. A preferred example of such a general reference electrode uses a redox couple element of the type described in connection with Figure 14 of aforesaid U.S.—A—4,053,381. Only a single aperture 27f or 27f′ is needed, and is preferably centrally located. A single drop of test liquid is applied and the transport zone distributes the liquid of that drop to all the electrodes, including the general reference electrode. For a reading, the two probes of the electrometer contact, respectively, the conductive metal layer of the general reference electrode and of the one of the other electrodes appropriate to the analyte under study.

In Figurees 14 and 15, a preferred embodiment of the multi-analyte test device of Figures 12 and 13 is illustrated. Parts similar to those previously described bear the same reference numeral but with the distinguishing suffix "g" applied. The device comprises a bridge member 36g and a plurality of ISE's 14g exactly as described for the other multi-analyte embodiments, except that each of the ISE's is located under lower member 40g, rather than at the sides of the transport zone 41g. Also, upper member 38g is preferably grooved as at 42g (Figure 14). Studs 58g space apart the upper and lower members 38g and 40g as in previous embodiments. The electrometer probes can contact the ISE's at the protruding layer 19g, through the support layer 20g, or by eliminating support layer 20g entirely.

Because ISE's 14g are located under member 40g, a specially designed flow aperture 140 is included in member 40g, superimposed directly above each ISE. It is this aperture which carried advancing liquid such as blood or blood serum away from zone 41g down into contact with the ISE's. To ensure the meniscus of the liquid will completely wet and fill the aperture 140, such aperture preferably has the shape as shown in Figure 15, namely two parallel sides 142 that close onto one another with two curved surfaces each having a radius of curvature "R₁" generated from centres of curvature that are spaced apart a distance "x". The most preferred dimensions for aperture 140 are $x = 1.5$ mm and $R_1 = 0.254$ mm.

## Claims

1. A device for determining the activity of an ionic analyte of a liquid, said device including a pair of solid electrodes each capable of generating an electrical potential proportional to the activity of an analyte of the liquid in contact with the electrode, and flow control means for ensuring contact of liquid with the electrodes, the flow control means extending from a first location adjacent one of said electrodes to a second location adjacent the other of said electrodes characterized in that said flow control means includes two opposed surfaces extending from said first location to said second location, said surfaces being spaced apart a distance effective to induce capillary flow of the liquid between said surfaces and to provide a transport zone, the transport zone being in communication with the exterior of the device and with the electrodes and at least 50% of the volume of the zone being void, whereby liquid in a drop applied to the exterior of the device can flow into the zone, under capillary action within the zone, and into contact with the electrodes.

2. A device according to claim 1, characterized in that the zone is in communication with the exterior of the device through an aperture for the liquid or through two apertures one for each of two liquids.

3. A device according to claim 1, characterized in that the zone is in communication with the exterior of the device through two apertures, the arrangements being such that first liquid in a first drop applied to one of the apertures flows within the zone and into contact with one of the electrodes, and that second liquid in a second drop applied to the other of the apertures flows within the zone and into contact with the other of the electrodes, the first and second liquids also flowing into contact with each other.

4. A device according to claim 3, characterized in that the zone is in communication with each electrode through a respective further aperture, said further apertures being aligned respectively with the apertures providing communication with the exterior of the device.

5. A device according to claim 2, 3 or 4 characterized in that the or each aperture providing communication between the exterior of the device and the zone is provided with a surface configuration for driving a drop of liquid from the edge of the aperture towards the centre of the aperture.

6. A device according to claim 5, characterized in that said surface configuration comprises a hexagonal formation of the bounding surface of the or each aperture.

7. A device according to any one of the preceding claims, characterized in that each of said two opposed surfaces is smooth.

8. A device according to any one of claims 1 to 6, characterized in that at least one of the opposed surfaces includes, across at least a portion thereof, a plurality of grooves formed in a predetermined pattern.

9. A device according to claim 8, characterized in that both opposed surfaces include, across at least opposed portions, a plurality of grooves formed in predetermined patterns, at least a substantial portion of the grooves of one surface being disposed at positive angles with respect to the directly opposed grooves of the other surface whereby liquid introduced between the surfaces is induced to advance with a predetermined peripheral wave front configuration.

## Revendications

1. Dispositif pour déterminer l'activité d'un constituant ionique d'un liquide, ledit dispositif comprenant un couple d'électrodes pleines pour produire, chacune, un potentiel électrique proportionnel à l'activité d'un constituant ionique du liquide en contact avec l'électrode, et un moyen de réglage de l'écoulement pour assurer le contact du liquide avec les électrodes, le moyen de réglage de l'écoulement s'étendant d'un premier emplacement à proximité immédiate de l'une des dites électrodes jusqu'à un second emplacement à proximité immédiate de l'autre des dites électrodes, dispositif caractérisé en ce que ledit moyen de réglage de l'écoulement comprend deux surfaces en vis-à-vis qui s'étendent dudit premier emplacement jusqu'au dit second emplacement, les dites surfaces étant séparées l'une de l'autre d'une distance permettant d'induire un écoulement capillaire du liquide entre les dites surfaces et de constituer une zone de déplacement, la zone de déplacement étant en communication avec l'extérieur du dispositif et avec les électrodes et au moins 50% du volume de la zone étant libre, afin de permettre au liquide d'une goutte déposée à l'extérieur du dispositif de s'écouler jusque dans la zone, par capillarité à l'intérieur de la zone, et de venir au contact des électrodes.

2. Dispositif suivant la revendication 1, caractérisé en ce que la zone est en communication avec l'extérieur du dispositif par l'intermédiaire d'une ouverture, une pour chacun des deux liquides.

3. Dispositif suivant la revendication 1, caractérisé en ce que la zone est en communication avec l'extérieur du dispositif par l'intermédiaire de deux ouvertures, l'agencement étant tel que la premier liquide d'une première goutte déposée à l'une des ouvertures s'écoule à l'intérieur de la zone et vient au contact de l'une des électrodes, et que le second liquide d'une seconde goutte déposée à l'autre ouverture s'écoule à l'intérieur de la zone et vient au contact de l'autre des électrodes, le premier et le second liquide s'écoulant aussi pour venir au contact l'un de l'autre.

4. Dispositif suivant la revendication 3, caractérisé en ce que la zone est en communication avec chaque électrode par l'intermédiaire d'une ouverture supplémentaire, les dites ouvertures supplémentaires étant alignées respectivement avec les ouvertures permettant la communication avec l'extérieur du dispositif.

5. Dispositif suivant la revendication 2, 3 ou 4, caractérisé en ce que l'ouverture ou chacune des ouvertures permettant la communication entre l'extérieur du dispositif et la zone possède une surface pour entraîner une goutte de liquid du bord de l'ouverture vers le centre de l'ouverture.

6. Dispositif suivant la revendication 5, caractérisé en ce que ladite surface comprend sur le pourtour de chacune des ouvertures une surface de conformation hexagonale.

7. Dispositif suivant l'une quelconque des revendications précédentes, caractérisé en ce que chacune des dites deux surfaces en vis-à-vis est lisse.

8. Dispositif suivant l'une quelconque des revendications 1 à 6, caractérisé en ce que au moins une des surfaces opposées comprend, disposées au travers d'au moins une partie de celle-ci, plusieurs rainures disposées selon une configuration prédéterminée.

9. Dispositif suivant la revendication 8, caractérisé en ce que les deux surfaces en vis-à-vis comprennent, disposées au travers d'au moins des parties opposées, plusieurs rainures disposées selon des configurations prédéterminées, au moins une partie importante des rainures d'une surface étant disposée suivant des angles non nuls par rapport aux rainures directement en vis-à-vis, de manière que le liquide introduit entre les surfaces soit forcé de progresser suivant un front d'onde périphérique de configuration prédéterminé.

## Patentansprüche

1. Vorrichtung zur Bestimmung der Aktivität einer ionischen Analysesubstanz einer Flüssigkeit, mit zwei Festelektroden, die beide ein der Aktivität einer Analysesubstanz der mit der Elektrode in Berührung befindlichen Flüssigkeit proportionales elektrisches Potential erzeugen können, und mit Mitteln zur Durchflußregelung, durch die der Kontakt von Flüssigkeit mit den Elektroden gewährleistet wird, wobei sich die Mittel zur Durchflußregelung von einem der einen Elektrode benachbarten ersten Punkt bis zu einem der anderen Elektrode benachbarten zweiten Punkt erstrecken, dadurch gekennzeichnet, daß die Mittel zur Durchflußregelung zwei einander gegenüberliegende Flächen aufweisen, die sich von dem genannten ersten Punkt bis zu dem zweiten Punkt erstrecken und die in einem eine Kapillarströmung der Flüssigkeit zwischen den beiden Flächen bewirkenden und eine Transportzone bildenden Abstand voneinander angeordnet sind, wobei die Transportzone mit der Außenseite der Vorrichtung und mit den Elektroden in Verbindung steht und mindestens 50% des Zonenraumes leer sind, so daß die in einem Tropfen auf die Außenseite der Vorrichtung aufgebrachte Flüssigkeit unter der in dieser Zone herrschenden Kapillarwirkung in die Zone einströmen und mit den Elektroden in Berührung gelangen kann.

2. Vorrichtung nach Anspruch 1, dadurch gekennzeichnet, daß die Zone mit der Außenseite der Vorrichtung über eine Öffnung für die Flüssigkeit bzw. über zwei Öffnungen für je eine von zwei Flüssigkeiten in Verbindung steht.

3. Vorrichtung nach Anspruch 1, dadurch gekennzeichnet, daß die Zone mit der Außenseite der Vorrichtung über zwei Öffnungen in Verbindung steht, wobei die Anordnung so getroffen ist, daß die in einem ersten Tropfen in eine der Öffnungen gebrachte erste Flüssigkeit in der Zone fließt und mit einer der Elektroden in Berührung gelangt und daß die in einem zweiten Tropfen in die andere Öffnung gebrachte zweite Flüssigkeit in der Zone fließt und mit der anderen Elektrode in Berührung gelangt, wobei die erste und die zweite Flüssigkeit während des Fließens auch miteinander in Berührung gelangen.

4. Vorrichtung nach Anspruch 3, dadurch gekennzeichnet, daß die Zone über jeweils eine weitere entsprechende Öffnung mit den beiden Elektroden in Verbindung steht, wobei die weiteren Öffnungen jeweils zu den die Verbindung mit der Außenseite der Vorrichtung herstellenden Öffnungen ausgerichtet sind.

5. Vorrichtung nach Anspruch 2, 3 oder 4, dadurch gekennzeichnet, daß die bzw. jede zwischen der Außenseite der Vorrichtung und der Zone eine Verbindung herstellende Öffnung eine Oberflächenkonfiguration aufweist, um einen Flüssigkeitstropfen von der Kante der Öffnung her zu deren Mitte hin zu bewegen.

6. Vorrichtung nach Anspruch 5, dadurch gekennzeichnet, daß die Oberflächenkonfiguration aus einer sechseckig ausgebildeten Begrenzungsfläche der bzw. jeder Öffnung besteht.

7. Vorrichtung nach einem der vorhergehenden Ansprüche, dadurch gekennzeichnet, daß jede der beiden einander gegenüberliegenden Flächen glatt ist.

8. Vorrichtung nach einem der Ansprüche 1 bis 6, dadurch gekennzeichnet, daß mindestens eine der einander gegenüberliegenden Flächen midestens in einem Bereich mehrere, ein vorbestimmtes Muster bildende Rillen aufweist.

9. Vorrichtung nach Anspruch 8, dadurch gekennzeichnet, daß die beiden einander gegenüberliegenden Flächen mindestens in gegenüberliegenden Bereichen mehrere, ein vorbestimmtes Muster bildende Rillen aufweisen, wobei mindestens ein wesentlicher Teil der Rillen der einen Fläche in einem Winkel von mehr als 0° zu den direkt gegenüberliegenden Rillen der anderen Fläche angeordnet ist, wo-

**0.010 457**

durch eine Vorwärtsbewegung der zwischen den Flächen eingeführten Flüssigkeit in einer vorbestimmten peripheren Wellenfrontform bewirkt wird.

FIG. 1

FIG. 2

FIG. 3

1

0010457

FIG. 4

FIG. 5a

FIG. 5b

FIG. 6

2

0 010 457

FIG. 7

16c · · 14c
38c · 57
92 27c 40c
94
70c
42c 27c' 92
94
16c
57 14c'

FIG. 8

27d · 98 · 27d'
70d'
41d
28d 28d" 70d
14d

IX ← → IX

FIG. 9

27d
41d
100
98 70d'
70d
14d

3

FIG. 11

FIG. 10

# FIG. 12

$14f_1$    $\overline{XIII}$    $42f$    $14f_1$

$14f_2$

$64f$

$27f$    $38f$

$27f'$

$36f$

$14f_3$    $130$    $14f_4$    $\overline{XIII}$    $14f_4$    $132$    $14f_3$

$20f$    $19f$

$14f_2$    $38f$  $27f'$  $42f$    $14f_4$

$41f$    $16f$    $134$

$18f$    $40f$

# FIG. 13

5

FIG. 14

FIG. 15